# EUROPEAN PATENT APPLICATION

(11) **EP 4 851 121 A1**
(43) Date of publication of application: **09.12.2026**
(21) Application number: 25748690.2
(22) Date of filing: 29.01.2025
(51) Int. Cl.: C04B 22/08, B09B 3/40, C04B 18/167, B09B 101/30, B09B 101/45, B09B 101/55

(54) **?-2 CAO?SIO2-CONTAINING FIRED PRODUCT AND METHOD FOR PRODUCING SAME**

(30) Priority: 30.01.2024 JP 2024012017
(71) Applicant: TOKUYAMA CORPORATION, Yamaguchi 745-8648 (JP); Denka Company Limited, Tokyo 103-8338 (JP)
(72) Inventor: OTA, Masami, Shunan-shi, Yamaguchi 745-8648 (JP); ONISHI, Takahiro, Shunan-shi, Yamaguchi 745-8648 (JP); ADACHI, Jo, Shunan-shi, Yamaguchi 745-8648 (JP); NAKAMURA, Akinori, Shunan-shi, Yamaguchi 745-8648 (JP); USHIRO, Masataka, Tokyo 103-8338 (JP); YAMASHITA, Kazuya, Tokyo 103-8338 (JP); MORI, Taiichiro, Tokyo 103-8338 (JP)
(74) Representative: TBK
(86) International application number: PCT/JP2025/002873
(87) International publication number: WO 2025/164687

(57) **Abstract**

A γ-2CaO·SiO₂ containing-calcined product, satisfying the following requirements a) and b):
a) C'/S' (molar ratio) shown by {[CaO] - 2([Al₂O₃] + [Fe₂O₃])}/{[SiO₂] - ([Al₂O₃] - [Fe₂O₃])} is 1.90 to 2.10;
b) Al₂O₃ is 25.00 mass% or less.

## Description

### TECHNICAL FIELD

The present invention relates to a calcined product containing γ-2CaO·SiO₂, and its production method.

### BACKGROUND ART

Recently, the tendency of decarbonization is accelerating globally, and in the cement industry which is a typical energy-intensive industry, the movement is increasing. Under such circumstances, while it does not have hydraulicity, γ type of 2CaO·SiO₂ which has high carbonation activity is recently getting attention, and plural studies are made regarding its use. For example, it is known that concrete having high durability which surface part is densified can be obtained by accelerated carbonation curing of concrete having mixed γ-2CaO·SiO₂ as admixture, and its utility has been recently found (Patent Literature 1).

On the other hand, in association with recent world environment issue, the efficient use of waste materials is a critical issue. By taking advantage of the characteristics of cement industry, cement production facilities, to efficiently use or treat waste materials as raw materials or heat energy source when producing cement clinker is said to be effective from the viewpoint of disposing waste materials safely and in a large quantity.

Among the waste materials, coal ash, municipal waste incineration ash, granulated blast furnace slag, air-cooled blast furnace slag, etc., particularly coal ash has a high Al₂O₃ content as compared to normal cement clinker composition. Thus, in case of increasing the used amount of such waste materials, the content of 3CaO·Al₂O₃ corresponding to interstitial phase of cement clinker components will increase, which will affect the cement physical properties. Therefore, the used amount of waste materials in the cement production is restricted by the amount of Al₂O₃ component, and there is a problem that it cannot be used in a large amount, and according to this, it is highly possible that effective use of waste material would be also required in the production of γ-2CaO·SiO₂ in the future.

However, when Al₂O₃ is present in the production of γ-2CaO·SiO₂, it is known that β-2CaO·SiO₂ is preferentially formed instead of γ-2CaO·SiO₂ (for example, see Patent Literature 2). In this Patent Literature 2, it is stated that when the total content of Al₂O₃ and Fe₂O₃ is 5.0 mass% or more after heating the raw material mixture at 1000°C, β-2CaO·SiO₂ is generated, and the purity of γ-2CaO·SiO₂ is worsened.

### CITATION LIST

### Patent Literatures

Patent Literature 1: Japanese Patent Application Laid-Open Publication No. 2006-182583
Patent Literature 2: International Publication No. 2012/099254

### SUMMARY OF INVENTION

### TECHNICAL PROBLEM

The production method of γ-2CaO·SiO₂ disclosed in Patent Literature 2 limits the total content of Al₂O₃ and Fe₂O₃ to less than 5 mass%, and recycling of waste materials such as concrete sludge, waste concrete, steel slag, etc. containing a large amount of Al₂O₃ cannot be expected.

The object of the present invention is to provide a calcined product containing a predetermined amount of γ-2CaO·SiO₂, which can use waste material with a high Al₂O₃ content as raw material, and its production method.

### SOLUTION TO PROBLEM

Conventionally, γ-2CaO·SiO₂ is produced so that C/S (molar ratio of CaO/SiO₂) is 2.0 by adjusting the composition. However, the present inventors have found that when using waste material with a high Al₂O₃ content as a part of raw material (including by-products generated in cement production, etc.), by adjusting the C/S to 2.0, a large amount of β-2CaO·SiO₂ is generated.

Thus, the present inventors have made a keen study based on this knowledge, and found out that by not using the C/S index as it is, but by using a novel index considering Al₂O₃ and Fe₂O₃ reacting with it, a calcined product containing a predetermined amount of γ-2CaO·SiO₂, which generation of β-2CaO·SiO₂ is suppressed can be obtained. The present invention has been thus completed.

Specifically, since Al₂O₃ reacts with CaO, SiO₂ and Fe₂O₃, and 4CaO·Al₂O₃·Fe₂O₃(C₄AF) and 2CaO·Al₂O₃·SiO₂(C₂AS) are formed, and the quantitative relationship of CaO and SiO₂ (C/S) is changed, they found out to design the composition by considering the copresence of the C₄AF and C₂AS.

Specifically, the present invention is as follows.
[1] A γ-2CaO·SiO₂ containing-calcined product, satisfying the following requirements a) and b):
   a) C'/S' (molar ratio) shown by {[CaO] - 2([Al₂O₃] + [Fe₂O₃])}/{[SiO₂] - ([Al₂O₃] - [Fe₂O₃])} is 1.90 to 2.10;
   b) Al₂O₃ is 25.00 mass% or less
[2] The γ-2CaO·SiO₂ containing-calcined product according to the above [1], wherein the b) Al₂O₃ is more than 5.00 mass% and 25.00 mass% or less.
[3] The γ-2CaO·SiO₂ containing-calcined product according to the above [1] or [2], wherein the content of γ-2CaO·SiO₂ is 25.0 mass% or more.
[4] The γ-2CaO·SiO₂ containing-calcined product according to any one of the above [1] to [3], wherein the γ-2CaO·SiO₂ containing-calcined product is a cement admixture.
[5] A method of producing the γ-2CaO·SiO₂ containing-calcined product according to any one of the above [1] to [4], comprising calcining a raw material mixture comprising CaO raw material, SiO₂ raw material and waste material at a calcination temperature of 1280°C to 1600°C.
[6] The method of producing a γ-2CaO·SiO₂ containing-calcined product according to the above [5], wherein the waste material is at least one waste material selected from coal ash, blast furnace slag, steel slag, concrete sludge, waste concrete, incineration fly ash, and municipal waste incineration ash.

### ADVANTAGEOUS EFFECT OF INVENTION

According to the present invention, it is possible to use waste material as a part of raw materials to produce γ-2CaO·SiO_{2,} additionally to conventional CaO raw material and SiO₂ raw material. Further, even in case of using waste material having a high content of Al₂O₃, a calcined product containing a predetermined amount of γ-2CaO·SiO₂ can be obtained by suppressing generation of β-2CaO·SiO_{2.} Therefore, according to the present invention, waste material can be further used effectively. Particularly, it is efficient to use waste material having limitation of used amount in the cement production, since it has a high content of Al₂O₃ as compared to cement clinker composition.

### BRIEF DESCRIPTION OF THE DRAWINGS

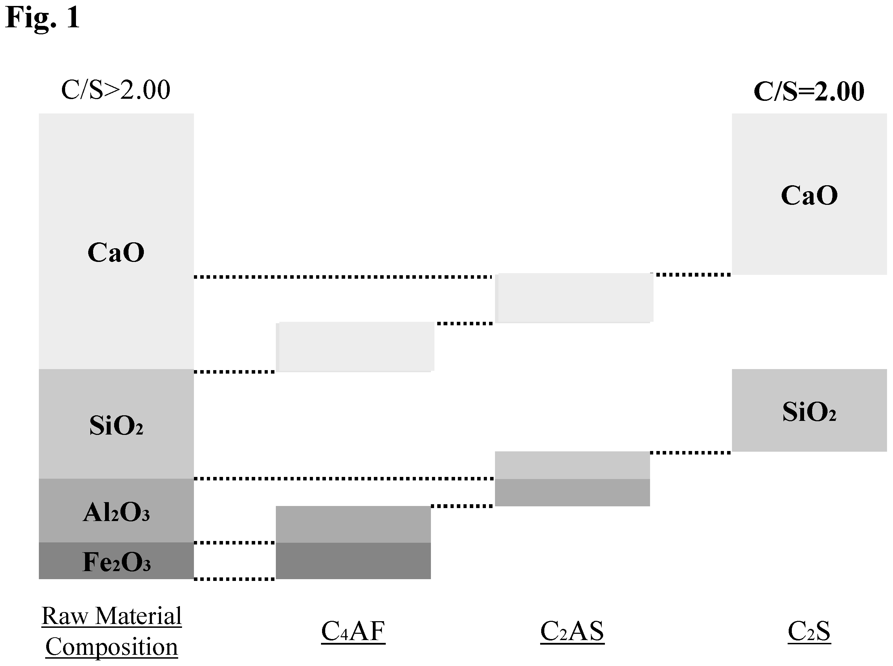

[Figure 1] It is a figure showing the theory being the base of condition a) of the present invention.

### DESCRIPTION OF EMBODIMENTS

The γ-2CaO·SiO₂ containing-calcined product of the present invention is characterized by satisfying the following requirements a) and b).
a) C'/S' (molar ratio) shown by {[CaO]-2([Al₂O₃]+[Fe₂O₃])}/{[SiO₂]-([Al₂O₃]-[Fe₂O₃])} is 1.90 to 2.10.
b) Al₂O₃ is 25.00 mass% or less.

The γ-2CaO·SiO₂ containing-calcined product of the present invention provides a novel index shown in the above a), by considering the influence of Al₂O₃ and Fe₂O₃ reacting with it. The significance of the index shown in the above a) is explained in the following.

First, by using raw materials comprising CaO, SiO₂, Al₂O₃ and Fe₂O₃, generally it is thought that reaction occurs in the order of the following (1) to (3). The schematic view is shown in Fig. 1.
(1) Fe₂O₃ reacts with Al₂O₃ and CaO, to form C₄AF.
(2) The remaining Al₂O₃ after forming C₄AF, reacts with CaO and SiO₂ to form C₂AS.
(3) The remaining CaO after forming C₄AF and C₂AS, reacts with SiO₂ to form 2CaO·SiO₂ (C₂S).

The molar ratio of the CaO and SiO₂ (C/S) in (3) is adjusted to be about 2.00.

Specifically, for CaO, in the above-mentioned reaction (1), 4-fold molar amount of Fe₂O₃ content is consumed, and in the reaction (2), 2-fold molar amount of the unreacted moiety of Al₂O₃ amount ([Al₂O₃] - [Fe₂O₃]) is consumed. Further, for SiO₂, in the above-mentioned reaction (2), equal molar amount of the unreacted moiety in (1) of Al₂O₃ amount ([Al₂O₃] - [Fe₂O₃]) is consumed.

Composition is designed so that C'/S' which is the molar ratio of the remaining amount of CaO and SiO₂ after this consumption becomes about 2.00 (1.90 - 2.10, preferably 1.93 - 2.07, more preferably 1.95 - 2.05).
The above balance is shown in the following Table 1.

**[Table 1]**

| component | g/mol | mass % | mol | mol balance | | |
|---|---|---|---|---|---|---|
| | | | | C₄AF | C₂AS | C₂S |
| CaO | 56.08 | - | ①[CaO] | 4*[Fe₂O₃] | 2*([Al₂O₃]-[Fe₂O₃]) | ③[CaO]-4*[Fe₂O₃]-2*([Al₂O₃]-[Fe₂O₃]) |
| SiO₂ | 60.08 | - | ②[SiO₂] | | [Al₂O₃]-[Fe₂O₃] | ④[SiO₂]-([Al₂O₃]-[Fe₂O₃]) |
| Al₂O₃ | 101.96 | - | [Al₂O₃] | [Fe₂O₃] | [Al₂O₃]-[Fe₂O₃] | 0 |
| Fe₂O₃ | 159.69 | - | [Fe₂O₃] | [Fe₂O₃] | | 0 |
| | | | | | C/S | ①/② |
| | | | | | C'/S' | ③/④ |

Meanwhile, by applying the results of Example 5 described in the following in Table 1, it is as follows.

**[Table 2]**

| component | g/mol | mass % | mol | mol balance | | |
|---|---|---|---|---|---|---|
| | | | | C₄AF | C₂AS | C₂S |
| CaO | 56.08 | 58.71 | 1.05 | 0.069 | 0.071 | 0.907 |
| SiO₂ | 60.08 | 29.45 | 0.49 | | 0.036 | 0.455 |
| Al₂O₃ | 101.96 | 5.37 | 0.053 | 0.017 | 0.036 | 0.000 |
| Fe₂O₃ | 159.69 | 2.74 | 0.017 | 0.017 | | 0.000 |
| | | | | | C/S | 2.14 |
| | | | | | C'/S' | 2.00 |

In the γ-2CaO·SiO₂ containing-calcined product of the present invention, b) Al₂O₃ is 25.00 mass% or less. If Al₂O₃ exceeds 25.00 mass%, a large amount of C₂AS and C₄AF generates, and it would not be possible to obtain a calcined product sufficiently containing γ-2CaO·SiO₂. It is preferable that Al₂O₃ is 22.00 mass% or less. Further, the lower limit of Al₂O₃ content is not particularly limited, while for example even it is 2.00 mass% or more, or a high amount of more than 5.00 mass%, a calcined product sufficiently containing γ-2CaO·SiO₂ can be obtained.

In the γ-2CaO·SiO₂ containing-calcined product of the present invention, it is preferable that c) Fe₂O₃/ Al₂O₃ (molar ratio) is 0.05 to 1.10. If Fe₂O₃/Al₂O₃ exceeds 1.1, depending on other requirements, a large amount of β-2CaO·SiO₂ is generated, and a calcined product sufficiently containing γ-2CaO·SiO₂ may not be obtained. Fe₂O₃/ Al₂O₃ (molar ratio) is more preferably 0.05 to 0.90, further preferably 0.25 to 0.90. In case Fe₂O₃/Al₂O₃ (molar ratio) is high, decrease of calcination temperature caused by generation of a melt at the time of calcination can be achieved.

As γ-2CaO·SiO₂ containing-calcined product of the present invention, it is preferable that the content of γ-2CaO·SiO₂ is 25.0 mass% or more, more preferably 30.0 mass% or more, further preferably 40.0 mass% or more, and particularly preferably 50.0 mass% or more. Further, it is preferable that the content of γ-2CaO·SiO₂ is higher than that of β-2CaO·SiO₂.

The γ-2CaO·SiO₂ containing-calcined product of the present invention produced as in the above can be used for example as cement admixture. Concrete or mortar using cement containing this calcined product will have a high durability since the surface part is densified by performing carbonation curing at the time of production. Further, in the production of concrete, etc., since carbon dioxide is absorbed in the concrete during carbonation curing, it is possible to reduce the carbon dioxide emissions when obtaining concrete products.

As raw materials for obtaining the γ-2CaO·SiO₂ containing-calcined product of the present invention, CaO raw material, SiO₂ raw material, and waste materials comprising Al₂O₃ and Fe₂O₃ are used.

In the present invention, since waste materials are used as raw material, waste materials can be efficiently used. Further, the γ-2CaO·SiO₂ containing-calcined product of the present invention can use a larger amount of waste materials as raw material. In the present invention, in case of using waste materials with a high content of Al₂O₃ as raw material, a calcined product comprising a high ratio of γ-2CaO·SiO₂ can be obtained by suppressing generation of β-2CaO·SiO₂.

As CaO raw material and SiO₂ raw material, CaO raw material and SiO₂ raw material well known as raw material for cement clinker production can be used without limitation, and specific examples include CaO raw materials such as limestone, quicklime and lime hydrate, etc., SiO₂ raw materials such as silica stone, silica fume, etc. Limestone (calcium carbonate) used as CaO raw material emits carbon dioxide at the time of calcination. However, in the present invention, by using waste materials containing calcium oxide usable as CaO raw material, such as concrete sludge or blast furnace slag, the used amount of limestone that is the cause of carbon dioxide emission can be reduced to suppress the carbon dioxide emission when producing γ-2CaO·SiO₂.

The waste material of the present invention means the waste material, byproduct used in the production of cement, etc. The waste materials that can be used are not particularly limited, and specific examples include blast furnace slag such as granulated blast furnace slag, air-cooled blast furnace slag, etc., steel slag, non-ferrous slag, coal ash, concrete sludge (including waste fresh concrete, remaining concrete), waste concrete, sewage sludge, water treatment sludge, paper making sludge, construction soil, casting sand, fall dust, incineration fly ash, molten fly ash, chlorine bypass dust, wood waste, waste white clay, coal waste, waste tire, seashell, municipal waste, or burned ash thereof (among these, some may become thermal energy source). Among these, waste materials containing Al₂O₃ which used amount is restricted by the amount of Al₂O₃ in the production of cement clinker are preferable from the point of further promoting the efficient use of waste materials. Examples of typical waste materials containing Al₂O₃ include blast furnace slag, steel slag, non-ferrous slag, coal ash, concrete sludge, waste concrete, sewage sludge, water treatment sludge, paper making sludge, casting sand, incineration fly ash, molten fly ash, municipal waste and incineration ash thereof, etc. Among these, use of coal ash, blast furnace slag, steel slag, concrete sludge, waste concrete, incineration fly ash, and municipal waste incineration ash is preferable, from the viewpoint that Al₂O₃ content is high as compared to normal cement clinker composition, and the main components are CaO, SiO₂, Al₂O₃. Further, these waste materials can be used in combination.

As a method for preparing and mixing the raw material mixture for producing a γ-2CaO·SiO₂ containing-calcined product, a well-known method can be appropriately employed. For example, the composition of CaO raw materials such as limestone, quicklime and lime hydrate, etc., SiO₂ raw materials such as silica stone, etc. and waste materials can be measured in advance, to calculate the blending ratio of each raw material from each component ratio of these raw materials so that the above-mentioned requirements a) and b) of the present invention are satisfied, to blend the raw materials with such ratio.

Smaller is the particle size of raw material mixture comprising CaO raw material, SiO₂ raw material and waste material, the calcination reaction rate becomes faster, while since the unit power consumption generated when each raw material and/or raw material mixture is crushed worsens, it is sufficient to prepare so that the 90 µm sieve residue is 10 to 30%, preferably 20 to 26%. The method for crushing each raw material and/or raw material mixture is not particularly limited, and it can be crushed with a well-known method.

In the present invention, the calcination temperature of the raw material mixture after preparation and mixing is preferably 1280°C to 1600°C, and more preferably 1350°C to 1500°C. When the calcination temperature is low, the free lime (f-CaO) amount tends to be large. It is preferable that free lime is less than 3.0 mass%, and more preferably 1.5 mass% or less. On the contrary, in case the calcination temperature is too high, since the raw materials melt and vitrify, the operation becomes difficult, and it is not preferable also from the viewpoint of the thermal energy usage. The calcination time depends on the calcination temperature, while it is generally 0.5 to 10 hours, preferably 1 to 5 hours.

The calcination method is not particularly limited, and rotary kiln, shaft kiln, electric furnace, tunnel furnace, fluidized firing type incinerator, etc. can be used. Among these, from the viewpoint that existing Portland cement production facility can be used, apparatus with which high-temperature heating such as cement kiln represented by NSP kiln or SP kiln is possible can be suitably used. Further, it is preferable to use such cement production facility from the viewpoint of large-scale production.

In the present invention, cooling operation is performed after calcination. However, cooling conditions are not particularly limited, and for example, in the existing Portland cement production facility, after calcining in rotary kiln, it can be immediately cooled with a cooling apparatus (air blower, sprinkler) called Clinker cooler.

### EXAMPLES

The constitution and effect of the present invention will be explained in the following by reference to the Examples, while the present invention is not limited to these Examples.

### [Examples 1 to 6 and Comparative Examples 1 to 12]

By using limestone as CaO raw material, silica stone as SiO₂ raw material, concrete sludge as waste material, the raw material mixture was prepared, calcined with an electric furnace at 1450°C for 60 min. and γ-2CaO·SiO₂ containing-calcined products with a predetermined composition were obtained. Table 3 shows the chemical composition of raw materials, and Table 4 shows the chemical composition and mineral composition of the obtained calcined products.

Meanwhile, the measurement of chemical composition of γ-2CaO·SiO₂ containing-calcined product was performed by X-ray fluorescence analysis in accordance with JIS R 5204. Further, measurement of mineral composition of γ-2CaO·SiO₂ containing-calcined product was obtained by performing X-ray diffraction analysis of the obtained calcined products, by Rietveld analysis.

**[Table 3]**

| | chemical composition of raw materials (mass %) | | | | Ig.loss (%) |
|---|---|---|---|---|---|
| | CaO | SiO₂ | Al₂O₃ | Fe₂O₃ | |
| limestone | 53.4 | 1.6 | 0.7 | 0.2 | 43.0 |
| silica stone | 0.2 | 88.2 | 4.8 | 2.6 | - |
| sludge | 42.8 | 25.0 | 7.4 | 4.1 | 14.8 |

**[Table 4]**

| | blending of raw material (mass %) | | | chemical composition of calcined product (mass %) | | | | C'/S*'* (-) | mineral composition of calcined product (mass %) | | | |
|---|---|---|---|---|---|---|---|---|---|---|---|---|
| | limestone | silica stone | sludge | CaO | SiO₂ | Al₂O₃ | Fe₂O₃ | | γC₂S | βC₂S | C₂AS | C₄AF |
| Comparative Example 1 | 53.5 | 16.5 | 30.0 | 57.13 | 32.01 | 4.82 | 2.49 | 1.78 | 16.3 | 52.9 | 11.4 | 0 |
| Comparative Example 2 | 54.1 | 15.9 | | 57.68 | 31.40 | 4.82 | 2.49 | 1.84 | 20.4 | 58.7 | 3.7 | 0 |
| Example 1 | 54.8 | 15.2 | | 58.76 | 30.68 | 4.77 | 2.41 | 1.93 | 70.9 | 15.4 | 0.6 | 0.8 |
| Example 2 | 55.2 | 14.8 | | 59.40 | 30.28 | 4.76 | 2.40 | 1.98 | 82.2 | 8.1 | 2.0 | 1.4 |
| Example 3 | 55.6 | 14.4 | | 59.73 | 29.83 | 4.73 | 2.39 | 2.03 | 58.0 | 29.9 | 1.4 | 5.7 |
| Comparative Example 3 | 56.4 | 13.6 | | 60.69 | 28.98 | 4.70 | 2.37 | 2.13 | 9.8 | 78.1 | 0 | 10.7 |
| Comparative Example 4 | 57.2 | 12.8 | | 61.78 | 28.14 | 4.67 | 2.33 | 2.24 | 2.3 | 83.0 | 0 | 11.6 |
| Comparative Example 5 | 46.6 | 13.4 | 40.0 | 56.89 | 30.90 | 5.45 | 2.87 | 1.82 | 10.9 | 60.8 | 6.5 | 0 |
| Comparative Example 6 | 47.1 | 12.9 | | 57.53 | 30.40 | 5.43 | 2.83 | 1.88 | 15.8 | 63.4 | 1.9 | 1.4 |
| Example 4 | 47.5 | 12.5 | | 58.17 | 29.93 | 5.40 | 2.79 | 1.94 | 47.4 | 33.6 | 1.3 | 2.1 |
| Example 5 | 48.0 | 12.0 | | 58.71 | 29.45 | 5.37 | 2.74 | 2.00 | 49.8 | 33.9 | 2.2 | 4.3 |
| Example 6 | 48.4 | 11.6 | | 59.22 | 28.98 | 5.38 | 2.74 | 2.05 | 39.9 | 49.2 | 1.9 | 8.0 |
| Comparative Example 7 | 49.2 | 10.8 | | 60.07 | 28.21 | 5.36 | 2.74 | 2.15 | 8.1 | 77.9 | 0.2 | 13.1 |
| Comparative Example 8 | 50.0 | 10.0 | | 61.15 | 27.41 | 5.27 | 2.69 | 2.26 | 1.6 | 83.3 | 0.2 | 11.7 |

### (Sludge mixing ratio: 30%)

The compositions of Examples 1 to 3 of the present invention (C'/S'=1.90 - 2.10) have a small content of β-2CaO·SiO₂ and a large content of γ-2CaO·SiO₂. On the other hand, in the compositions of Comparative Examples 1 to 4 (C'/S': less than 1.90 or more than 2.10), a large amount of β-2CaO·SiO₂ is generated, and the content of γ-2CaO·SiO₂ is small.

### (Sludge mixing ratio: 40%)

The compositions of Examples 4 to 6 of the present invention (C'/S'=1.90 - 2.10) have a small content of β-2CaO·SiO₂ and a large content of γ-2CaO·SiO₂. On the other hand, in the compositions of Comparative Examples 5 to 8 (C'/S': less than 1.90 or more than 2.10), a large amount of β-2CaO·SiO₂ is generated, and the content of γ-2CaO·SiO₂ is small.

### [Examples 7 to 18]

Instead of concrete sludge, by using special-grade reagents Al₂O₃ and Fe₂O₃ the raw material mixture was prepared, calcined with an electric furnace at 1450°C for 60 min. and γ-2CaO·SiO₂ containing-calcined products with a predetermined composition were obtained. Tables 5 and 6 show the chemical composition and mineral composition of the obtained calcined products. In Examples 7 to 12 shown in Table 5, the content of Al₂O₃ was changed, and in Examples 13 to 18 shown in Table 6, Fe₂O₃/Al₂O₃ (molar ratio) was changed.

**[Table 5]**

| | blending of raw material (mass %) | | | | chemical composition of calcined product (mass %) | | | | C'/S' (-) | mineral composition of calcined product (mass %) | | | |
|---|---|---|---|---|---|---|---|---|---|---|---|---|---|
| | limestone | silica stone | Al₂O₃ | Fe₂O₃ | CaO | SiO₂ | Al₂O₃ | Fe₂O₃ | | γC₂S | βC₂S | C₂AS | C₄AF |
| Example 7 | 73.9 | 3.7 | 2.1 | 20.3 | 57.94 | 27.83 | 7.81 | 4.34 | 2.00 | 82.2 | 8.1 | 2.0 | 1.4 |
| Example 8 | 72.6 | 5.3 | 2.2 | 19.9 | 56.52 | 26.89 | 10.18 | 4.35 | 2.01 | 70.5 | 3.1 | 14.5 | 5.9 |
| Example 9 | 71.2 | 7.1 | 2.2 | 19.5 | 54.81 | 25.92 | 12.76 | 4.46 | 2.01 | 58.4 | 3.7 | 25.6 | 6.5 |
| Example 10 | 69.8 | 9.0 | 2.2 | 19.0 | 53.22 | 24.87 | 15.35 | 4.53 | 2.03 | 49.9 | 3.8 | 34.6 | 7.7 |
| Example 11 | 68.3 | 10.9 | 2.3 | 18.5 | 51.54 | 23.86 | 17.99 | 4.62 | 2.04 | 44.0 | 5.3 | 38.7 | 7.1 |
| Example 12 | 66.8 | 12.8 | 2.3 | 18.1 | 49.97 | 22.86 | 20.56 | 4.66 | 2.06 | 29.1 | 9.9 | 50.7 | 6.0 |

**[Table 6]**

| | blending of raw material (mass %) | | | | chemical composition of calcined product (mass %) | | | | Fe₂O₃ /Al₂O₃ (molar ratio) | C'/S' (-) | mineral composition of calcined product (mass %) | | | |
|---|---|---|---|---|---|---|---|---|---|---|---|---|---|---|
| | limestone | silica stone | Al₂O₃ | Fe₂O₃ | CaO | SiO₂ | Al₂O₃ | Fe₂O₃ | | | γC₂S | βC₂S | C₂AS | C₄AF |
| Example 13 | 75.1 | 22.5 | 2.4 | 0 | 59.23 | 31.23 | 6.23 | 1.24 | 0.13 | 1.97 | 77.4 | 4.7 | 9.4 | 0.0 |
| Example 14 | 75.0 | 21.9 | 2.4 | 0.6 | 59.27 | 30.29 | 6.19 | 2.18 | 0.22 | 1.99 | 84.2 | 2.7 | 4.4 | 1.1 |
| Example 15 | 74.9 | 21.3 | 2.5 | 1.3 | 59.07 | 29.49 | 6.17 | 3.19 | 0.33 | 1.98 | 88.0 | 3.0 | 2.2 | 2.1 |
| Example 16 | 74.8 | 20.7 | 2.5 | 2.0 | 58.97 | 28.61 | 6.14 | 4.19 | 0.44 | 1.99 | 84.2 | 3.6 | 0.9 | 7.7 |
| Example 17 | 74.7 | 20.1 | 2.5 | 2.7 | 58.91 | 27.68 | 6.12 | 5.19 | 0.54 | 2.00 | 80.5 | 3.9 | 1.0 | 10.7 |
| Example 18 | 74.4 | 18.9 | 2.6 | 4.1 | 58.88 | 25.97 | 5.99 | 7.12 | 0.76 | 2.02 | 62.9 | 14.6 | 1.2 | 17.6 |

As shown in Table 5, in the compositions of Examples 7 to 12 of the present invention (C'/S'=1.90 - 2.10), even Al₂O₃ is increased, the content of β-2CaO·SiO₂ is low, and the content of γ-2CaO·SiO₂ is large.

As shown in Table 6, in the compositions of Examples 13 to 18 of the present invention (C'/S'=1.90 - 2.10), even Fe₂O₃/Al₂O₃ (molar ratio) is increased, the content of β-2CaO·SiO₂ is low, and the content of γ-2CaO·SiO₂ is large.

### INDUSTRIAL APPLICABILITY

Since the γ-2CaO·SiO₂ containing-calcined product of the present invention can be used as cement admixture, it is industrially useful.

## Claims

1. A γ-2CaO·SiO₂ containing-calcined product, satisfying the following requirements a) and b):
a) C'/S' (molar ratio) shown by {[CaO] - 2([Al₂O₃] + [Fe₂O₃])}/{[SiO₂] - ([Al₂O₃] - [Fe₂O₃])} is 1.90 to 2.10;
b) Al₂O₃ is 25.00 mass% or less.

2. The γ-2CaO·SiO₂ containing-calcined product according to claim 1, wherein the b) Al₂O₃ is more than 5.00 mass% and 25.00 mass% or less.

3. The γ-2CaO·SiO₂ containing-calcined product according to claim 1, wherein the content of γ-2CaO·SiO₂ is 25.0 mass% or more.

4. The γ-2CaO·SiO₂ containing-calcined product according to claim 1, wherein the γ-2CaO·SiO₂ containing-calcined product is a cement admixture.

5. A method of producing the γ-2CaO·SiO₂ containing-calcined product according to any one of claims 1 to 4, comprising calcining a raw material mixture comprising CaO raw material, SiO₂ raw material and waste material at a calcination temperature of 1280°C to 1600°C.

6. The method of producing a γ-2CaO·SiO₂ containing-calcined product according to claim 5, wherein the waste material is at least one waste material selected from coal ash, blast furnace slag, steel slag, concrete sludge, waste concrete, incineration fly ash, and municipal waste incineration ash.
